# FASCICULE DE BREVET EUROPEEN

(11) **EP 0 577 474 B1**
(45) Date de publication et mention de la délivrance du brevet: **23.12.1998**
(21) Numéro de dépôt: 93401623.9
(22) Date de dépôt: 24.06.1993
(51) Int. Cl.: H04M 19/04

(54) **Circuit de sonnerie notamment pour poste téléphonique**
Weckschaltung für einen Telefonapparat
Ringing circuit for telephone set

(30) Priorité: 02.07.1992 FR 9208152
(43) Date de publication de la demande: 05.01.1994
(73) Titulaire: MATRA NORTEL COMMUNICATIONS, 29000 Quimper (FR)
(72) Inventeur: Le Corre, Jean-Luc, F-29000 Quimper (FR)
(74) Mandataire: Fruchard, Guy

(56) Documents cités:
- EP-A- 0 134 867
- WO-A-81/00657
- US-A- 4 309 574

## Description

La présente invention concerne un circuit de sonnerie, notamment bien que non exclusivement un circuit de sonnerie pour poste téléphonique.

On connaît des circuits de sonnerie comportant un haut parleur recevant des signaux d'un amplificateur, l'amplificateur ayant une entrée d'alimentation reliée par l'intermédiaire d'un organe d'alimentation à découpage à une ligne de sonnerie fournissant un signal de sonnerie, et une entrée de cadencement recevant un signal de cadencement. L'intensité du courant du signal de cadencement varie entre une valeur maximale et une valeur minimale qui sont constantes et font fonctionner l'amplificateur en saturation. Le fonctionnement de ces circuits pose plusieurs problèmes. Un premier problème consiste à obtenir une puissance acoustique suffisante, c'est-à-dire au moins égale à un minimum requis, pour une tension nominale du signal de sonnerie tout en assurant un fonctionnement satisfaisant lorsque la tension du signal de sonnerie est faible par rapport à la tension nominale. On a en effet constaté sur les circuits existants que, lorsqu'ils sont bien adaptés à un signal de sonnerie à une tension nominale, par exemple de l'ordre de 80 volts, ils ont tendance à émettre un son de puissance acoustique variable par manque d'énergie lorsque la tension du signal de sonnerie est faible, par exemple de l'ordre de 25 volts, en particulier lorsque le poste téléphonique est relié à une ligne longue avec deux ou trois postes en parallèle, ce phénomène étant bien connu sous le nom de pompage. Ce problème est d'autant plus d'actualité que les normes de tension du signal de sonnerie varient selon les pays de sorte qu'un circuit de sonnerie bien adapté aux normes d'un pays peut être mal adapté à un pays voisin. Il est donc actuellement nécessaire de prévoir des circuits de sonnerie notablement différents en fonction des pays.

Un second problème consiste à obtenir une variation linéaire de la puissance acoustique émise lorsque le circuit de sonnerie est relié à un organe de réglage de l'intensité d'écoute, lequel agit généralement sur le gain de l'amplificateur. En effet, dans les circuits existants où la puissance du signal de sonnerie n'est pas prise en compte, la répartition de l'intensité d'écoute est faite par rapport à la puissance disponible à la tension nominale du signal de sonnerie de sorte que si le signal de sonnerie n'est pas à la tension nominale, la puissance disponible est totalement utilisée dès les bas niveaux du réglage de l'intensité d'écoute et une variation de réglage dans le sens d'une augmentation de l'intensité d'écoute au-delà du niveau correspondant à la puissance disponible reste sans incidence sur la puissance acoustique fournie par le haut parleur, ou peut même provoquer un pompage, la puissance demandée étant alors plus forte que la puissance disponible.

Le but de l'invention est de résoudre ces problèmes ou en tout cas de les minimiser avec un circuit de sonnerie directement adapté aux normes de sonnerie de différents pays ou pouvant être adapté de façon très aisée aux normes particulières d'un pays.

En vue de la réalisation de ce but, on prévoit selon l'invention un circuit de sonnerie du type précité comportant un organe de régulation relié en entrée à la ligne de sonnerie pour donner un signal image d'une puissance du signal de sonnerie, et relié en sortie à un organe de transformation assurant une transformée du signal image par le signal de cadencement et fournissant cette transformée à l'entrée de cadencement de l'amplificateur.

Ainsi, contrairement aux dispositifs antérieurs, les valeurs minimale et maximale du courant de cadencement à l'entrée de l'amplificateur varient en fonction de la puissance disponible dans le signal de sonnerie de sorte que la puissance demandée par l'amplificateur à l'entrée d'alimentation reliée à la ligne de sonnerie reste toujours proportionnée à la puissance disponible et ne provoque donc pas de pompage même pour un réglage maximal du gain de l'amplificateur. En outre, dans le cas où l'amplificateur comporte une entrée permettant un réglage du niveau d'écoute, le réglage maximal du niveau d'écoute correspond automatiquement à la puissance maximale disponible dans le signal de sonnerie et les niveaux d'écoute intermédiaires correspondent donc effectivement à des puissances atténuées du signal sonore délivré par le haut parleur par rapport à la puissance maximale délivrée lors d'un réglage au niveau maximal, que ce réglage soit effectué de façon continue au moyen d'un potentiomètre ou selon des pas préétablis par raccordement à un logiciel de commande du niveau d'écoute.

Selon un aspect avantageux de l'invention, l'organe de régulation comporte une résistance de régulation montée en dérivation par rapport à la ligne de sonnerie et est relié à celle-ci par l'intermédiaire de miroirs de courant. Ainsi, tout en réalisant une indépendance d'impédance par rapport à la ligne de sonnerie, on obtient à une borne de la résistance de régulation une tension qui est significative de la puissance du signal de sonnerie.

Selon un autre aspect avantageux de l'invention, le dispositif de sonnerie comporte un organe convertisseur de tension en courant disposé entre la résistance de régulation et l'organe de transformation. Ainsi, la tension de régulation prise à la résistance de régulation est convertie en un courant de régulation qui est aisément transformé par le courant du signal de cadencement au niveau de l'organe de transformation.

Selon un mode de réalisation préféré de l'invention, le dispositif de sonnerie comporte une source de courant assurant un prélèvement de courant entre l'organe convertisseur de tension en courant et l'organe de transformation. Ainsi, on obtient un réglage optimal du dispositif de sonnerie en assurant un réglage de la source de courant dans les conditions minimales de tension du signal de sonnerie de façon à supprimer tout pompage au niveau du haut parleur.

Selon encore un autre aspect avantageux de l'invention, le dispositif comporte une résistance d'adaptation disposé en dérivation sur la ligne de sonnerie, entre la ligne de sonnerie et un miroir de courant.

Selon encore un autre aspect avantageux de l'invention, le dispositif de sonnerie comporte une capacité montée en parallèle à la résistance de régulation. Ainsi on supprime la tension alternative résiduelle du signal de sonnerie qui n'a pas pu être totalement supprimée par les filtres disposés en amont du dispositif de sonnerie afin de ne pas retarder de façon indue l'apparition d'un son sur le haut parleur.

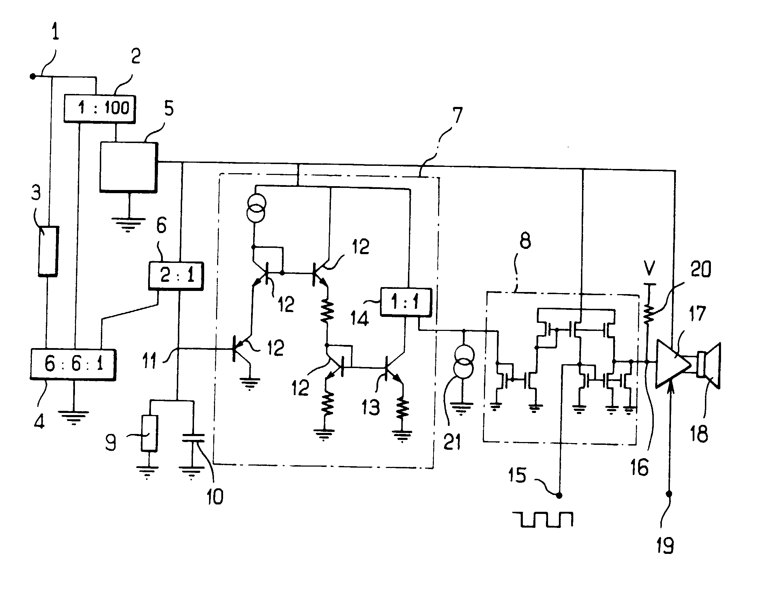

D'autres caractéristiques et avantages de l'invention apparaîtront à la lecture de la description qui suit d'un mode de réalisation particulier non limitatif du circuit de sonnerie selon l'invention en référence à la figure unique ci-jointe qui est un diagramme schématique de ce mode de réalisation.

En référence à la figure, le circuit de sonnerie selon l'invention comporte une ligne de sonnerie 1 fournissant un signal de sonnerie sous forme d'une tension de sonnerie redressée et filtrée par des dispositifs conventionnels non représentés disposés en amont de la ligne de sonnerie 1. La ligne de sonnerie 1 est reliée d'une part à un miroir de courant 2 de rapport 1:100 et d'autre part à une résistance d'adaptation 3 qui est reliée à un second miroir de courant 4 à trois bornes qui sont dans le rapport 6:6:1, la résistance d'adaptation 3 étant reliée à une des bornes de valeur 6. La borne de valeur 1 du miroir de courant 2 est reliée à la seconde borne de valeur 6 du miroir de courant 4. La borne de valeur 100 du miroir de courant 2 est reliée à une alimentation à découpage 5 dont la structure conventionnelle n'a pas été représentée en détail sur la figure.

La sortie de l'alimentation à découpage 5 est reliée à un troisième miroir de courant 6, un organe convertisseur de tension en courant 7 et un organe de transformation 8. Le miroir de courant 6 a ses bornes dans le rapport 2:1, la borne de valeur 2 étant reliée à la borne de valeur 1 du miroir de courant 4 tandis que la borne de valeur 1 est reliée à une résistance de régulation 9 dont l'autre borne est mise à la masse. Un condensateur 10 est monté en parallèle à la résistance de régulation 9 et sert à filtrer la composante résiduelle du double de la fréquence de sonnerie qui n'a pas été complètement éliminée par les dispositifs de filtrage placés en amont du circuit de sonnerie. Au point commun 11 de la résistance de régulation 9, du condensateur 10 et du miroir 6, la tension recueillie qui sera par la suite appelée tension de régulation, est proportionnelle à la tension du signal de sonnerie dans le rapport de la résistance de régulation à la résistance d'adaptation d'une part et dans la combinaison des rapports des miroirs d'autre part, soit un douzième dans le mode de réalisation illustré.

La tension de régulation est fournie au convertisseur de tension en courant 7 qui comporte quatre transistors 12 montés de façon que les jonctions base-émetteur de ces transistors se compensent dans les plages de variation de la tension du signal de sonnerie. Un transistor 13 a sa base reliée à la base du dernier transistor 12 et son collecteur relié à un miroir de courant 14 de rapport 1:1 de sorte que le courant de régulation qui est fourni à la sortie du convertisseur de tension en courant 7 est proportionnel à la tension de régulation. Ce courant est donc un signal image de la puissance disponible dans le signal de sonnerie. Le courant de régulation est fourni à l'organe de transformation 8 comportant un montage de transistors MOS relié à une borne d'entrée 15 recevant un signal de cadencement d'un circuit logique non représenté. L'organe de transformation 8 assure ainsi une transformée du courant de régulation qui est ainsi fourni au rythme du signal de cadencement avec un signe positif ou négatif à l'entrée de cadencement 16 d'un amplificateur 17 dont la sortie est reliée à un haut parleur 18. L'amplificateur 17 comporte également une entrée d'alimentation reliée directement au signal de sonnerie et une entrée d'alimentation reliée à une borne 19 recevant un signal de réglage de niveau d'écoute qui lui est fourni par un dispositif conventionnel non représenté, par exemple un potentiomètre ou un circuit logique comportant un organe de commande pas à pas.

De façon connue en soi l'entrée 16 de l'amplificateur 17 est reliée à une tension de référence V par l'intermédiaire d'une résistance d'entrée 20.

Dans le mode de réalisation préféré illustré, le circuit de sonnerie comporte également une source de courant 21 assurant un prélèvement de courant entre l'organe convertisseur de tension en courant 7 et l'organe de transformation 8 afin d'optimiser le circuit comme il sera indiqué ci-dessous.

Pour un pays donné, la résistance 3 est choisie pour assurer une impédance minimale du circuit de sonnerie conforme aux normes du pays considéré et la résistance 9 est ensuite choisie en fonction de la résistance 3 et du type de haut parleur choisi pour que l'image de la puissance disponible qui est donnée au point 11 du circuit soit telle que pour un gain maximum de l'amplificateur 17 le courant délivré au haut parleur 18 ne soit pas un courant de saturation, ceci afin que les variations du réglage de niveau d'écoute données par le signal de réglage appliqué à la borne 19 se traduisent par une variation de la puissance acoustique délivrée par le haut parleur 18 quel que soit le réglage du niveau d'écoute. La source de courant 21 est également choisie pour que dans les conditions de fonctionnement minimal, c'est-à-dire pour une tension minimale du signal de sonnerie sur la ligne 1, un prélèvement de courant suffisant soit effectué entre l'organe convertisseur de tension en courant 7 et l'organe de transformation 8 pour que le signal de sortie de l'amplificateur 17 ne soit pas soumis à un pompage. Dans ces conditions on est assuré que sur la plage de fonctionnement du circuit de sonnerie celui-ci fonctionnera dans des conditions optimales.

Bien entendu l'invention n'est pas limitée au mode de réalisation décrit et on pourra y apporter des variantes de réalisation sans sortir du cadre de l'invention tel que défini par les revendications. En particulier, le détail des circuits de l'organe convertisseur de tension en courant et de l'organe de transformation ne sont pas critiques et pourront être réalisés sous d'autres formes assurant la même fonction. De même, les rapports des miroirs de courant ne sont pas critiques et seront adaptés en fonction du signal image que l'on souhaite obtenir à partir de la puissance disponible dans le signal de sonnerie. En outre, bien que l'invention ait été décrite en relation avec un amplificateur 17 comportant une borne d'entrée 19 permettant un réglage du gain de l'amplificateur, l'invention s'applique également à un amplificateur à gain fixe afin d'éviter un pompage de cet amplificateur lorsque la puissance du signal de sonnerie varie.

Bien que l'on ait prévu d'adapter la résistance 3 aux normes de chaque pays on remarquera que la souplesse de fonctionnement du circuit de sonnerie selon l'invention permet d'utiliser ce circuit dans des conditions notablement différentes de sorte qu'un fonctionnement très satisfaisant peut être obtenu même lorsque la résistance 3 n'est pas exactement adaptée aux normes d'un pays donné.

## Revendications

1. Circuit de sonnerie comportant un haut parleur (18) recevant des signaux d'un amplificateur (17), l'amplificateur ayant une entrée d'alimentation reliée par l'intermédiaire d'un organe d'alimentation à découpage (5) à une ligne de sonnerie (1) fournissant un signal de sonnerie, et une entrée de cadencement (16) recevant un signal de cadencement caractérisé en ce qu'il comporte un organe de régulation (2,4,6,9) relié en entrée à la ligne de sonnerie (1) pour donner un signal image d'une puissance du signal de sonnerie, et relié en sortie à un organe de transformation (8) assurant une transformée du signal image par le signal de cadencement et fournissant cette transformée à l'entrée de cadencement (16) de l'amplificateur (17).

2. Circuit de sonnerie selon la revendication 1, caractérisé en ce qu'il comporte une entrée de réglage (19) de gain de l'amplificateur (17).

3. Circuit de sonnerie selon la revendication 1, caractérisé en ce que l'organe de régulation comporte une résistance de régulation (9) montée en dérivation par rapport à la ligne de sonnerie et reliée à celle-ci par l'intermédiaire de miroirs de courant (2,4,6).

4. Circuit de sonnerie selon la revendication 3, caractérisé en ce qu'il comporte un organe convertisseur de tension en courant (7) disposé entre la résistance de régulation (9) et l'organe de transformation (8).

5. Circuit de sonnerie selon la revendication 4, caractérisé en ce qu'il comporte une source de courant (21) assurant un prélèvement de courant entre l'organe convertisseur de tension en courant (7) et l'organe de transformation (8).

6. Circuit de sonnerie selon la revendication 3, caractérisé en ce qu'il comporte une résistance d'adaptation (3) disposé en dérivation sur la ligne de sonnerie (1), entre la ligne de sonnerie et un miroir de courant (4).

7. Circuit de sonnerie selon la revendication 3, caractérisé en ce qu'il comporte une capacité (10) montée en parallèle à la résistance de régulation (9).

## Patentansprüche

1. Weckschaltung mit einem Lautsprecher (18), der Signale eines Verstärkers (17) empfängt, wobei der Verstärker einen Versorgungseingang, der über ein Schaltnetzteil (5) mit einer ein Wecksignal bereitstellenden Weckleitung (1) verbunden ist, und einen Takteingang (16) hat, der ein Taktsignal empfängt, dadurch **gekennzeichnet**, daß sie eine Regeleinrichtung (2, 4, 6, 9) hat, die eingangsseitig mit der Weckleitung (1) zum Geben eines für die Leistung des Wecksignales repräsentativen Kennsignales und ausgangsseitig mit einer Transformationseinrichtung (8) verbunden ist, die eine durch das Taktsignal Transformierte des Kennsignales sicherstellt und diese Transformierte am Takteingang (16) des Verstärkers (17) bereitstellt.

2. Weckschaltung nach Anspruch 1, dadurch **gekennzeichnet**, daß sie einen Regeleingang (19) zur Regelung der Verstärkung des Verstärkers (17) hat.

3. Weckschaltung nach Anspruch 1, dadurch **gekennzeichnet**, daß die Regeleinrichtung einen Regelwiderstand (9) hat, der bezogen auf die Weckleitung parallelgeschaltet ist und mit ihr über Stromspiegel (2, 4, 6) verbunden ist.

4. Weckschaltung nach Anspruch 3, dadurch **gekennzeichet**, daß sie einen Spannungs-Strom-Wandler (7) hat, der zwischen dem Regelwiderstand (9) und der Transformationseinrichtung (8) angeordnet ist.

5. Weckschaltung nach Anspruch 4, dadurch **gekennzeichnet**, daß sie eine Stromquelle (21) hat, die eine Stromentnahme zwischen dem Spannungs-Strom-Wandler (7) und der Transformationseinrichtung (8) gewährleistet.

6. Weckschaltung nach Anspruch 3, dadurch **gekennzeichnet**, daß sie einen Anpassungswiderstand (3) hat, der im Nebenschluß zur Weckleitung (1) zwischen der Weckleitung und einem Stromspiegel (4) angeordnet ist.

7. Weckschaltung nach Anspruch 3, dadurch **gekennzeichnet**, daß sie einen Kondensator (10) hat, der parallel zum Regelwiderstand (9) geschaltet ist.

## Claims

1. A ringer circuit comprising a loudspeaker (18) receiving signals from an amplifier (17), the amplifier having a power supply input connected to a ringer line (1) via a chopper power supply (5), and a melody input (16) receiving a melody signal, the circuit being characterized in that it includes a regulation unit (2, 4, 6, 9) having an input connected to the ringer line (1) for giving an image signal representative of the power of the ringer signal, and having an output connected to a transformation unit (8) ensuring transformation of the image signal by the melody signal and providing a transformed signal to the melody input (16) of the amplifier (17).

2. A ringer circuit according to claim 1, characterized in that it includes an input (19) for setting the gain of the amplifier (17).

3. A ringer circuit according to claim 1, characterized in that the regulation unit includes a regulation resistor (9) mounted in shunt across the ringer line and connected to that line via current mirrors (2, 4, 6).

4. A ringer circuit according to claim 3, characterized in that it includes a voltage-to-current converter (7) connected between the regulation resistor (9) and the transformation unit (8).

5. A ringer circuit according to claim 4, characterized in that it includes a current source (21) taking current from between the voltage-to-current converter (7) unit and the transformation unit (8).

6. A ringer circuit according to claim 3, characterized in that it includes an adjusting resistor (3) connected in shunt across the ringer line (1), between the ringer line and a current mirror (4).

7. A ringer circuit according to claim 3, characterized in that it includes a capacitor (10) connected in parallel across the regulation resistor (9).
